# EUROPÄISCHE PATENTSCHRIFT

(11) **EP 2 349 786 B1**
(45) Veröffentlichungstag und Bekanntmachung des Hinweises auf die Patenterteilung: **01.08.2012**
(21) Anmeldenummer: 09755854.8
(22) Anmeldetag: 20.10.2009
(51) Int. Cl.: B60R 13/10

(54) **KRAFTFAHRZEUG-ANZEIGEVORRICHTUNG, KRAFTFAHRZEUG-ELEKTRONIKSYSTEM, KRAFTFAHRZEUG, VERFAHREN ZUR ANZEIGE VON DATEN UND COMPUTERPROGRAMMPRODUKT**
MOTOR VEHICLE DISPLAY APPARATUS, MOTOR VEHICLE ELECTRONIC SYSTEM, MOTOR VEHICLE, METHOD FOR DISPLAYING DATA, AND COMPUTER PROGRAM PRODUCT
DISPOSITIF D'AFFICHAGE POUR VÉHICULE À MOTEUR, SYSTÈME ÉLECTRONIQUE POUR VÉHICULE À MOTEUR, VÉHICULE À MOTEUR, PROCÉDÉ D'AFFICHAGE DE DONNÉES ET PRODUIT-PROGRAMME D'ORDINATEUR

(30) Priorität: 23.10.2008 DE 102008043123
(43) Veröffentlichungstag der Anmeldung: 03.08.2011
(73) Patentinhaber: Bundesdruckerei GmbH, 10958 Berlin (DE)
(72) Erfinder: PAESCHKE, Manfred, 16348 Wandlitz (DE); DIETRICH, Frank, 12437 Berlin (DE); FISCHER, Jörg, 13053 Berlin (DE)
(74) Vertreter: Richardt Patentanwälte GbR
(86) Internationale Anmeldenummer: PCT/EP2009/063740
(87) Internationale Veröffentlichungsnummer: WO 2010/046363

(56) Entgegenhaltungen:
- WO-A-99/19170
- WO-A-99/32329
- DE-A1-102006 025 023
- DE-U1-202004 017 458
- FR-A- 2 902 385

## Beschreibung

Die Erfindung betrifft eine Kraftfahrzeug-Anzeigevorrichtung, ein Kraftfahrzeug-Elektroniksystem, ein Kraftfahrzeug, ein Verfahren zur Anzeige von Daten sowie ein Computerprogrammprodukt.

Aus US 5,657,008 ist ein elektronisches Kraftfahrzeug-Kennzeichen bekannt, in dem eine Fahrzeug-Identifizierungsnummer gespeichert ist. Die Fahrzeugldentffizierungsnummer dient zur Prüfung, ob das elektronische Kraftfahrzeug-Kennzeichen auch tatsächlich zu dem Kraftfahrzeug, an welchem es angebracht ist, gehört.

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist.

Aus US 2007/0285361 A1 ist ein System für drahtlose elektronische Kraftfahrzeug-Kennzeichen bekannt. Die Eingabe von Daten in das elektronische Kraftfahrzeug-Kennzeichen ist nur hierzu autorisierten Personen möglich, und zwar mit Hilfe eines geheimen Codes.

Aus der zum Anmeldezeitpunkt unveröffentlichten Patentanmeldung DE 102008042259.2 derselben Anmelderin ist ein Kraftfahrzeug-Elektronikgerät bekannt, welches zum Empfang von Daten von einem ID-Token ausgebildet ist, sowie zur Ansteuerung einer Kraftfahrzeug-Anzeigevorrichtung zur Anzeige dieser Daten.

Aus der DE 202004017458 U Display-Hoheitskennzeichen mit elektrischer Dauerschildfunktion bekannt, die für Fahrzeuge und/oder Spot- und Werbetafel Displays anwendbar ist. Eine veränderbare Beschriftung basierend z.B. auf Flüssigkeitskristallen, digitalen LCD-Modulen und/oder LED-Modulen wird eingesetzt, um z.B. die Herstellung von KFZ-Kennzeichen mit veränderbarem Anzeigeninhalt zu ermöglichen.

Demgegenüber liegt der Erfindung die Aufgabe zugrunde, eine verbesserte Kraftfahrzeug-Anzeigevorrichtung, ein Kraftfahrzeug-Elektroniksystem, ein Kraftfahrzeug sowie ein Verfahren zur Anzeige von Daten und ein entsprechendes Computerprogrammprodukt zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung hat die Kraftfahrzeug-Anzeigevorrichtung ein elektronisches Gerät und eine Anzeigevorrichtung, die eine bauliche Einheit bilden. Beispielsweise kann das Format der Kraftfahrzeug-Anzeigevorrichtung in etwa den Abmessungen eines bislang im Stand der Technik üblichen Kraftfahrzeug-Nummernschildes entsprechen.

Das elektronische Gerät hat einen ersten Speicherbereich zur Speicherung von Daten sowie einen zweiten Speicherbereich zur Speicherung zumindest eines ersten Zertifikats. Ferner hat das elektronische Gerät eine erste Schnittstelle zum Empfang der Daten und einer Signatur der Daten sowie zumindest des ersten Zertifikats. Die Daten und deren Signatur einerseits und das erste Zertifikat andererseits können von demselben oder unterschiedlichen Sendern empfangen werden.

Das elektronische Gerät hat Mittel zur Prüfung der Gültigkeit der Signatur der Daten mit Hilfe des ersten Zertifikats. Eine notwendige Voraussetzung für die Speicherung der Daten in dem ersten Speicherbereich ist, dass die Signatur gültig ist. Nur dann werden diese Daten mit Hilfe von Mitteln zur Ansteuerung der Anzeigevorrichtung wiedergegeben.

Nach Ausführungsformen der Erfindung sind die Mittel zur Prüfung der Gültigkeit der Signatur zur Durchführung einer Zertifikatskettenprüfung mit Hilfe des ersten Zertifikats ausgebildet.

Ausführungsformen der Erfindung sind besonders vorteilhaft, da über die erste Schnittstelle zumindest das erste Zertifikat empfangen werden kann, welches eine Aktualisierung des oder der in dem elektronischen Gerät gespeicherten Zertifikate ermöglicht. Die Zertifikate einer Public Key Infrastructure (PKI) haben nämlich üblicherweise eine begrenzte Gültigkeit von zum Beispiel zwei bis drei Jahren. Nach Ablauf dieser Gültigkeitsdauer muss also eine Aktualisierung des oder der Zertifikate erfolgen, was erfindungsgemäß über die Schnittstelle des elektronischen Geräts vorgenommen werden kann.

Nach einer Ausführungsform der Erfindung handelt es sich bei dem ersten Zertifikat um ein sogenanntes Root-Zertifikat, mit Hilfe dessen eine Zertifikatskettenprüfung für die Prüfung der Gültigkeit der Signatur der Daten durchgeführt werden kann.

Nach einer Ausführungsform der Erfindung handelt es sich bei dem elektronischen Gerät um eine integrierte elektronische Schaltung, wie zum Beispiel einen sogenannten RFID-Chip.

Die erste Schnittstelle des elektronischen Geräts kann zum drahtlosen Empfang der Daten, deren Signatur und/oder des ersten Zertifikats von einem externen Sender ausgebildet sein. Alternativ oder zusätzlich kann die erste Schnittstelle auch so ausgebildet sein, dass die Daten, deren Signatur und/oder das erste Zertifikat von einem internen Sender, der zu dem Kraftfahrzeug gehört, empfangen werden können, wie zum Beispiel von einem Kraftfahrzeug-Elektronikgerät, insbesondere einer sogenannten Electronic Control Unit (ECU).

Nach einer Ausführungsform der Erfindung sind das elektronische Gerät und die Anzeigevorrichtung untrennbar miteinander verbunden, sodass eine zerstörungsfreie Trennung des elektronischen Geräts und der Anzeigevorrichtung nicht möglich ist. Beispielsweise sind hierzu das elektronische Gerät und die Anzeigevorrichtung durch eine Vergussmasse so innig miteinander verbunden, dass der Versuch einer Trennung zwangsläufig zur Zerstörung des elektronischen Geräts und/oder der Anzeigevorrichtung führt.

Nach einer Ausführungsform der Erfindung beinhaltet das elektronische Gerät Mittel zur kryptografischen Authentifizierung des Senders, beispielsweise nach einem sogenannten Challenge-Response-Protokoll. Eine Speicherung der von dem Sender empfangenen Daten in dem ersten Speicherbereich erfolgt nur dann, wenn eine solche kryptografische Authentifizierung erfolgreich durchgeführt worden ist.

Nach einer Ausführungsform der Erfindung beinhaltet das elektronische Gerät Mittel zur gegenseitigen kryptografischen Authentifizierung des elektronischen Geräts und des Senders. Hierdurch wird sichergestellt, dass der Sender die Daten nur an ein valides elektronisches Gerät absendet.

Nach einer weiteren Ausführungsform der Erfindung hat das elektronische Gerät einen Speicherbereich zur Speicherung eines Kraftfahrzeug-Identifikators. Bei dem Kraftfahrzeug-Identifikator handelt es sich um einen Identifikator, durch den ein Kraftfahrzeug eindeutig identifiziert wird, wie zum Beispiel die Fahrgestellnummer des Kraftfahrzeugs. Durch den in dem Speicherbereich gespeicherten Kraftfahrzeug-Identifikator wird die Kraftfahrzeug-Anzeigevorrichtung eindeutig dem Kraftfahrzeug mit demselben Kraftfahrzeug-Identifikator zugeordnet. Diese Zuordnung kann so ausgebildet sein, dass sie unveränderlich ist. Eine weitere Voraussetzung für die Speicherung der Daten in dem ersten Speicherbereich für deren Anzeige auf der Anzeigevorrichtung kann dann sein, dass über die erste Schnittstelle eine Kennung empfangen wird, welche mit dem Kraftfahrzeug-Identifikator, der in dem Speicherbereich gespeichert ist, identisch ist.

Nach einer weiteren Ausführungsform der Erfindung handelt es sich bei der Kraftfahrzeug-Anzeigevorrichtung um ein elektronisches Kraftfahrzeug-Kennzeichen, d.h. ein Kraftfahrzeug-Kennzeichen, welches mit einem Display ausgestattet ist, auf welchem das amtliche Kennzeichen des Kraftfahrzeugs wiedergeben wird.

In einem weiteren Aspekt betrifft die Erfindung ein Kraftfahrzeug-Elektroniksystem mit einer Ausführungsform der erfindungsgemäßen Kraftfahrzeug-Anzeigevorrichtung und einem Kraftfahrzeug-Elektronikgerät.

Nach Ausführungsformen der Erfindung hat das Kraftfahrzeug-Elektronikgerät eine zweite Schnittstelle zum Aufbau einer ersten Verbindung zu einem ersten ID-Token, um aus dem ersten ID-Token Daten auszulesen. Bei dem ersten ID-Token kann es sich um ein Dokument, insbesondere ein Wert- oder Sicherheitsdokument, handeln, in welches ein elektronischer Speicher und eine Schnittstelle für den Aufbau der Verbindung zu der zweiten Schnittstelle des Kraftfahrzeug-Elektronikgeräts integriert sind. Insbesondere kann in das Dokument ein RFID-Chip integriert sein, in dem die Daten gespeichert sind.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente wie Dienstausweise sowie auch Chipkarten, Zahlungsmittel, insbesondere Bankkarten und Kreditkarten, Frachtbriefe oder sonstige Berechtigungsnachweise, in die ein Datenspeicher zur Speicherung zumindest eines Attributs integriert ist.

Bei dem Dokument kann es sich vorzugsweise um einen elektronischen Fahrzeugschein oder Fahrzeugbrief oder ein anderes Kraftfahrzeugdokument handeln.

Das Kraftfahrzeug-Elektronikgerät hat einen Speicher zur Speicherung eines Zertifikats einer Public-Key-Infrastruktur (PKI). Beispielsweise kann das Zertifikat dem X.509 Standard entsprechen. In demselben oder einem anderen Speicher des Kraftfahrzeug-Elektronikgeräts kann ferner ein sogenanntes Root-Zertifikat dieser PKI gespeichert sein. Das Zertifikat und das Root-Zertifikat haben typischerweise eine begrenzte Gültigkeitsdauer, die in dem Zertifikat bzw. dem Root-Zertifikat angegeben ist.

Das Kraftfahrzeug-Elektronikgerät hat ferner Mittel zur Authentifizierung gegenüber dem ersten ID-Token mit Hilfe des Zertifikats. Beispielsweise erfolgt die Authentifizierung mit Hilfe eines Challenge-Response-Verfahrens. Hierzu überträgt das Kraftfahrzeug-Elektronikgerät sein Zertifikat über die erste Verbindung an den ersten ID-Token. Dieser generiert eine Challenge, beispielsweise in der Form einer Zufallszahl, welche der erste ID-Token mit dem öffentlichen Schlüssel des Zertifikats verschlüsselt und das Chiffrat über die erste Verbindung an das Kraftfahrzeug-Elektronikgerät überträgt. Das Kraftfahrzeug-Elektronikgerät muss dann über den privaten Schlüssel verfügen, der dem Zertifikat zugeordnet ist, um dieses Chiffrat korrekt entschlüsseln zu können.

Optional kann vorgesehen sein, dass sich auch der erste ID-Token gegenüber dem Kraftfahrzeug-Elektronikgerät authentifizieren muss, bevor die Daten aus dem ersten ID-Token ausgelesen werden. Dies kann in analoger Weise zu der Authentifizierung des Kraftfahrzeug-Elektronikgeräts gegenüber dem ID-Token geschehen. Beispielsweise wird also so vorgegangen, dass der ID-Token sein Zertifikat an das Kraftfahrzeug-Elektronikgerät über die erste Verbindung überträgt und danach das Challenge-Response Verfahren durchgeführt wird. Für die Prüfung der Validität des Zertifikats des ersten ID-Tokens kann das Kraftfahrzeug-Elektronikgerät das Root-Zertifikat verwenden.

Das Kraftfahrzeug-Elektronikgerät verfügt über Mittel zur Ansteuerung zumindest einer erfindungsgemäßen Kraftfahrzeug-Anzeigevorrichtung zur Wiedergabe der Daten. Beispielsweise sind zwei Anzeigevorrichtungen vorhanden, die anstelle der üblichen Nummernschilder vorne und hinten an einem Kraftfahrzeug angeordnet sind. Die Anzeigevorrichtungen haben zumindest je ein Display, wobei verschiedene Displaytechnologien zum Einsatz kommen können.

Beispielsweise sind die Displays so ausgebildet, dass die Wiedergabe der Daten auch ohne ständige Energieversorgung erfolgen kann. Solche Displays benötigen nur dann elektrische Energie, wenn sich die wiederzugebenden Daten ändern.

Hierbei handelt es sich beispielsweise um bistabile Displays, wie zum Beispiel elektrophoretische Anzeigen, elektrochrome Anzeigen, Drehelementanzeigen, ferroelektrische Anzeigen, Anzeigen auf der Basis des Elektrowetting-Effekts sowie bistabile LCD-Anzeigen, zum Beispiel twisted nematic, super twisted nematic, cholesterische oder nematische LCD-Anzeigen. Dabei kann es sich ferner auch um Hybridanzeigen handeln, die verschiedene dieser Anzeigetechnologien miteinander kombinieren.

Ferner sind aus dem Stand der Technik flexible, bistabile Displays bekannt, die von der Firma Citala kommerziell erhältlich sind. Solche Anzeigen sind auch aus US 2006/0250534 A1 bekannt. Weitere bistabile elektrophoretische Anzeigen sind beispielsweise aus WO 99/53371 und EP 1715 374 A1 bekannt.

Bistabile Displays werden auch als "Electronic Paper Display" (EPD) bezeichnet.

Solchen bistabilen Displays haben im Allgemeinen den Vorteil, dass sie sich bei heller Beleuchtung sehr gut lesen lassen, und dass keine Energieversorgung erforderlich ist, um über lange Zeit gleich bleibende Bilddaten wiederzugeben.

Es können auch emissive Displays zum Einsatz kommen, die zur Wiedergabe der Daten eine Energieversorgung benötigen. Hierbei kann es sich zum Beispiel um LED-Anzeigen, insbesondere anorganische, organische oder Hybrid-LED-Anzeigen handeln. Die Anzeigevorrichtung kann auch auf der Basis eines elektrolumineszierenden Mediums realisiert sein, wie es zum Beispiel an sich aus der US 2002/0079494 A1 und US 6,091,194 bekannt ist.

Die Anzeigevorrichtung kann auch ganz oder teilweise drucktechnisch aufgebracht sein und so eine innige und nicht lösbare Verbindung mit dem Kraftfahrzeug bzw. mit Teilen des Kraftfahrzeuges bilden. Die Herstellung beispielsweise von TFT's durch direktes Aufbringen mit Hilfe von Drucktechnik ist an sich bekannt aus WO 03/098696 As.

Das Kraftfahrzeug-Elektronikgerät hat ferner eine dritte Schnittstelle zur Speicherung des Zertifikats in dem Speicher. Über die dritte Schnittstelle kann also auf den Speicher des Kraftfahrzeug-Elektronikgeräts zugegriffen werden, um das Zertifikat dorthin zu übertragen und zu speichern, beispielsweise um bei einem neuen Kraftfahrzeug das Zertifikat erstmals in den Speicher einzubringen oder um das Zertifikat zu aktualisieren.

Nach einer Ausführungsform der Erfindung beinhalten die Daten, die über die zweite Schnittstelle von dem ersten ID-Token ausgelesen werden, das amtliche Kraftfahrzeug-Kennzeichen für das Kraftfahrzeug. Beispielsweise hat sich das Kraftfahrzeug-Kennzeichen aufgrund einer Ummeldung bei einer Kraftfahrzeug-Meldestelle geändert. Das geänderte Kraftfahrzeug-Kennzeichen wird von der Meldestelle in dem ersten ID-Token gespeichert. Dies kann online erfolgen, indem eine sichere Verbindung zwischen dem ersten ID-Token und einem Servercomputer aufgebaut wird, über die die Daten mit dem neuen Kraftfahrzeug-Kennzeichen in den ersten ID-Token geschrieben werden. Eine solche sichere Verbindung kann zum Beispiel mittels Ende-zu-Ende-Verschlüsselung über einen Client-Computer, an den ein Lesegerät für den ersten ID-Token angeschlossen ist, realisiert werden. Die Daten mit dem neuen amtlichen Kraftfahrzeug-Kennzeichen können von der Kraftfahrzeug-Meldestelle signiert sein.

Ausführungsformen der vorliegenden Erfindung sind besonders vorteilhaft, da eine vollständig elektronische Abwicklung der Aktualisierung des amtlichen Kraftfahrzeug-Kennzeichens ermöglicht wird. Insbesondere ist die Herstellung und Anbringung von neuen Nummernschildern nicht mehr notwendig. Hierdurch können in erheblichen Maßen Ressourcen eingespart werden und Abfall vermieden werden. Ferner erübrigen sich auch die bislang mit der Ausstellung von neuen Kraftfahrzeug-Nummernschildern verbundenen Behördengänge.

Ausführungsformen der vorliegenden Erfindung sind besonders vorteilhaft, da die Aktualisierung des amtlichen Kraftfahrzeug-Kennzeichens durch Übertragung der Daten vom dem ersten ID-Token an das Kraftfahrzeug-Elektronikgerät auf besonders sichere Art und Weise bei maximaler Bequemlichkeit für den Nutzer erfolgt. Dies wird durch den Einsatz kryptographischer Verfahren basierend auf einer PKI erreicht, beispielsweise zur einseitigen oder gegenseitigen Authentifizierung des Kraftfahrzeug-Elektronikgeräts und des ersten ID-Tokens und/oder durch Prüfung der Signatur der von dem ersten ID-Token empfangenen Daten durch das Kraftfahrzeug-Elektronikgerät und/oder durch einen kryptographischen Schutz der ersten Verbindung, über die die Daten von dem ersten ID-Token durch das Kraftfahrzeug-Elektronikgerät empfangen werden.

Nach einer Ausführungsform der Erfindung ist die zweite Schnittstelle des Kraftfahrzeug-Elektronikgeräts kontaktlos ausgebildet, beispielsweise als Funk-Schnittstelle, insbesondere als kontaktlose Schnittstelle, die nach einem RFID-Verfahren arbeitet. Insbesondere kann die zweite Schnittstelle so ausgebildet sein, dass über sie auch ein elektronischer Schlüssel des Kraftfahrzeugs angesprochen wird. Bei dem elektronischen Schlüssel kann es sich zum Beispiel um eine Chipkarte handeln, wie zum Beispiel eine RFID-Chipkarte. Es kann aber auch eine weitere Schnittstelle zur Kommunikation mit dem elektronischen Schlüssel vorhanden sein, insbesondere eine RFID Schnittstelle.

Nach einer Ausführungsform der Erfindung ist die dritte Schnittstelle des Kraftfahrzeug-Elektronikgeräts kontaktbehaftet ausgebildet. Beispielsweise ist die dritte Schnittstelle zum Anschluss eines Kabels vorgesehen. Insbesondere kann das Kraftfahrzeug-Elektronikgerät als sogenannte Electronic Control Unit (ECU) des Kraftfahrzeugs ausgebildet sein. Für Diagnose- und/oder Wartungszwecke wird die ECU mit einem externen Gerät, beispielsweise einem Terminal, einer Kraftfahrzeug-Werkstatt oder einer technischen Prüfstelle verbunden. Über dieses Kabel kann dann zwischen dem externen Gerät und der ECU eine Verbindung aufgebaut werden, über die das Zertifikat in dem Speicher gespeichert werden kann, um es beispielsweise zu aktualisieren. Dies kann beispielsweise anlässlich einer Wartung des Kraftfahrzeugs oder anlässlich einer sogenannten Hauptuntersuchung des Kraftfahrzeugs vorgenommen werden.

Nach einer Ausführungsform der Erfindung ist die dritte Schnittstelle zur Ausbildung einer Netzwerkverbindung vorgesehen, was kontaktbehaftet oder kontaktlos erfolgen kann. Beispielsweise ist die dritte Schnittstelle als Mobilfunk-Schnittstelle nach einem Mobilfunkstandard ausgebildet, sodass das Zertifikat über Mobilfunk empfangen werden kann.

Nach einer Ausführungsform der Erfindung wird über die dritte Schnittstelle zunächst ein eindeutiger Kraftfahrzeug-Identifikator, der in dem Kraftfahrzeug-Elektronikgerät gespeichert ist, abgefragt. Bei dem Kraftfahrzeug-Identifikator kann es sich zum Beispiel um die Fahrgestellnummer des Kraftfahrzeugs handeln. Mit Hilfe dieses Kraftfahrzeug-Identifikators wird dann ein Zertifikat generiert oder abgerufen, welches zu dem betreffenden Kraftfahrzeug oder dessen Anzeigevorrichtung gehört.

Nach einer Ausführungsform der Erfindung ist die zweite Schnittstelle zur Kommunikation mit einem zweiten ID-Token ausgebildet. Der zweite ID-Token dient zur Zugangskontrolle für das Kraftfahrzeug. Der Besitz des zweiten ID-Tokens ist Voraussetzung dafür, dass sich das Kraftfahrzeug von dem Benutzer öffnen und/oder starten lässt. Beispielsweise handelt es sich bei dem zweiten ID-Token um eine RFID-Chipkarte, welche als elektronischer Schlüssel ("E-Schlüssel") dient.

In dem zweiten ID-Token ist ein Schlüssel-Identifikator gespeichert. Dieser Schlüssel-Identifikator wird von dem Kraftfahrzeug-Elektronikgerät über dessen zweite Schnittstelle von dem zweiten ID-Token abgefragt. Wenn der aus dem zweiten ID-Token über die zweite Schnittstelle empfangene Schlüssel-Identifikator zu einem in dem Kraftfahrzeug-Elektronikgerät gespeicherten Referenzwert des Schlüssel-Identifikators passt, generiert das Kraftfahrzeug-Elektronikgerät ein Signal, um zum Beispiel die Zentralverriegelung des Kraftfahrzeugs zu entriegeln und/oder das Starten des Motors des Kraftfahrzeugs freizugeben.

Statt der zweiten Schnittstelle kann auch eine weitere Schnittstelle für die Kommunikation zwischen dem Kraftfahrzeug-Elektronik-Gerät und zweiten ID-Token vorhanden sein, z.B. eine weitere RFID-Schnittstelle, die eine größere Reichweite als die zweite Schnittstelle hat. Die Reichweite der weiteren Schnittstelle ist so gewählt, dass der zweite ID-Token von dem Kraftfahrzeug-Elektronikgerät erfasst wird, wenn sich der zweite ID-Token noch außerhalb des Kraftfahrzeugs befindet, wohingegen die Reichweite der zweiten Schnittstelle so gewählt ist, dass sich der erste ID-Token innerhalb der Kraftfahrzeuginnenraums befinden muss, damit die erste Verbindung aufgebaut werden kann. Voraussetzung für die Aktualisierung des Kraftfahrzeug-kennzeichens ist dann also, dass zunächst der Nutzer das Kraftfahrzeug entriegeln und einsteigen muss.

Vorzugsweise wird als Schlüssel-Identifikator nicht der Kraftfahrzeug-Identifikator gewählt. Dies hat den Vorteil, dass bei einem Verlust des zweiten ID-Tokens dieser zweite ID-Token durch einen anderen ersetzt werden kann, indem ein anderer Schlüssel-Identifikator gespeichert ist. Die zweite Schnittstelle des Kraftfahrzeug-Elektronikgeräts ist vorzugsweise so ausgebildet, dass hierüber auf den Speicherbereich des Kraftfahrzeug-Elektronikgeräts zugegriffen werden kann, in dem der Schlüssel-Identifikator gespeichert ist, um den dort gespeicherten Schlüssel-Identifikator des verlorengegangenen zweiten ID-Tokens durch den neuen Schlüssel-Identifikator des neuen zweiten ID-Tokens zu ersetzen. Beispielsweise ist der neue Schlüssel-Identifikator signiert, wobei das Kraftfahrzeug-Elektronikgerät die Validität der Signatur prüft, bevor der alte Schlüssel-Identifikator durch den neuen Schlüssel-Identifikator ersetzt wird.

Nach einer Ausführungsform der Erfindung hat das Kraftfahrzeug-Elektronikgerät Mittel zum Aufbau eines gesicherten Datenübertragungskanals zur Ansteuerung der zumindest einen Kraftfahrzeug-Anzeigevorrichtung. Beispielsweise erfolgt die Datenübertragung über diesen Datenübertragungskanal verschlüsselt, um eine Manipulation der Ansteuerung der zumindest einen Anzeigevorrichtung zu unterbinden.

In einem weiteren Aspekt betrifft die Erfindung ein Kraftfahrzeug mit zumindest einer von außen sichtbar an dem Kraftfahrzeug angeordneten Kraftfahrzeug-Anzeigevorrichtung.

Nach einer Ausführungsform der Erfindung beinhaltet das Kraftfahrzeug eine Ausführungsform des erfindungsgemäßen Kraftfahrzeug-Elektroniksystems. Ein solches Kraftfahrzeug ist besonders vorteilhaft, da eine Aktualisierung des amtlichen Kennzeichens in zugleich bequemer und sicherer Art und Weise erfolgen kann. Insbesondere ist besonders vorteilhaft, dass der bisher erforderliche Austausch der Nummernschilder bei einem Wechsel des amtlichen Kennzeichens des Kraftfahrzeugs erfindungsgemäß vermieden werden kann, wodurch die Herstellungskosten der neuen Nummernschilder, der logistische Aufwand für deren Bereitstellung sowie auch die Kosten für die Entsorgung der alten Nummernschilder entfallen können.

In einem weiteren Aspekt betrifft die Erfindung ein Verfahren zur Anzeige von Daten auf einer Ausführungsform einer erfindungsgemäßen Kraftfahrzeug-Anzeigevorrichtung. Eine notwendige Voraussetzung für die Anzeige der Daten ist, dass die Daten signiert von einem Sender empfangen werden, und dass diese Signatur gültig ist. Zur Prüfung der Gültigkeit der Signatur wird ein in einem Speicherbereich der Kraftfahrzeug-Anzeigevorrichtung gespeichertes Zertifikat, insbesondere ein sogenanntes Root-Zertifikat, verwendet. Eine Aktualisierung des Root-Zertifikats erfolgt über die Schnittstelle der Kraftfahrzeug-Anzeigevorrichtung, beispielsweise anlässlich einer turnusmäßigen Wartung und/oder anlässlich einer sogenannten Hauptuntersuchung.

Nach Ausführungsformen der Erfindung sind die Mittel zur Prüfung der Gültigkeit der Signatur zur Durchführung einer Zertifikatskettenprüfung mit Hilfe des Zertifikats ausgebildet.

In einem weiteren Aspekt betrifft die Erfindung ein Computerprogrammprodukt mit ausführbaren Instruktionen zur Durchführung einer Ausführungsform eines erfindungsgemäßen Verfahrens. Beispielsweise ist das Computerprogramm zur Ausführung durch einen Mikroprozessor des elektronischen Geräts der Kraftfahrzeug-Anzeigevorrichtung ausgebildet.

Im Weiteren werden Ausführungsformen der Erfindung mit Bezugnahme auf die Zeichnungen näher erläutert. Es zeigen:
- Figur 1: ein Blockdiagramm einer ersten Ausführungsform einer erfindungsgemäßen Kraftfahrzeug-Anzeigevorrichtung,
- Figur 2: ein Flussdiagramm einer Ausführungsform eines erfindungsgemäßen Verfahrens,
- Figur 3: ein Blockdiagramm einer weiteren Ausführungsform einer erfindungsgemäßen Kraftfahrzeug-Anzeigevorrichtung,
- Figur 4: ein Blockdiagramm einer Ausführungsform eines erfindungsgemäßen Kraftfahrzeug-Elektroniksystems und eines erfindungsgemäßen Kraftfahrzeugs,
- Figur 5: ein Blockdiagramm einer weiteren Ausführungsform eines erfindungsgemäßen Kraftfahrzeug-Elektroniksystems und eines erfindungsgemäßen Kraftfahrzeugs.

Einander entsprechende Elemente der nachfolgenden Ausführungsformen werden jeweils mit demselben Bezugszeichen gekennzeichnet.

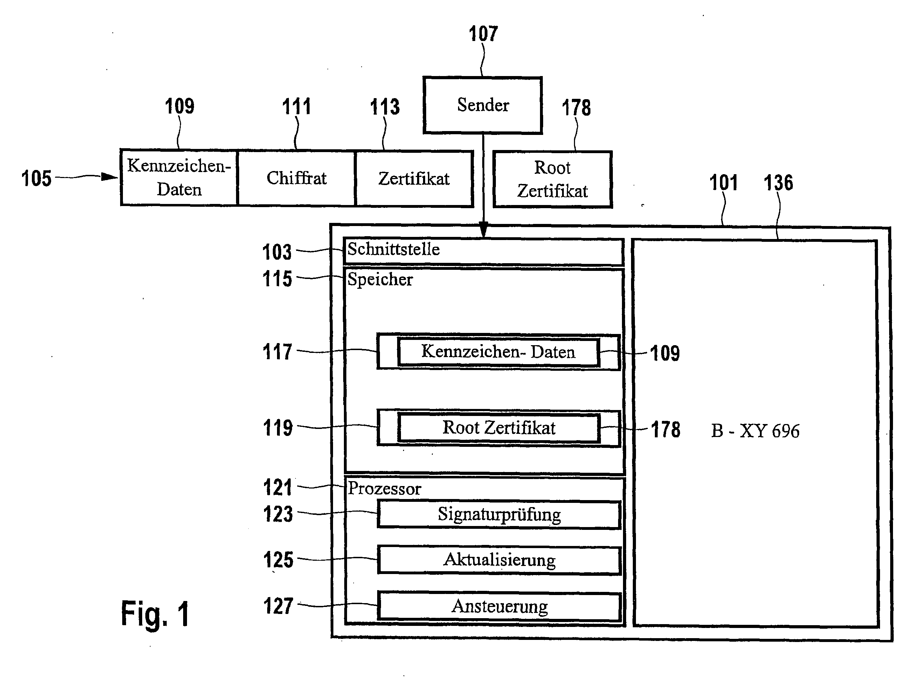

Die Figur 1 zeigt eine Ausführungsform einer erfindungsgemäßen Kraftfahrzeug-Anzeigevorrichtung 101. Die Kraftfahrzeug-Anzeigevorrichtung 101 hat eine Anzeige, d.h. ein sogenanntes Display 136, welches in etwa das Format eines üblichen Kraftfahrzeug-Nummernschildes haben kann. Das Display 136 dient zur Wiedergabe des amtlichen Kennzeichens, wie zum Beispiel des amtlichen Kennzeichens B - YX 696.

Die Kraftfahrzeug-Anzeigevorrichtung 101 hat eine Schnittstelle 103 zum Empfang zum Beispiel einer Nachricht 105 von einem Sender 107. Die Nachricht 105 kann zum Beispiel die auf dem Display 136 wiederzugebenden Daten, d.h. die Kennzeichendaten 109, ein Chiffrat 111 und ein Zertifikat 113 beinhalten. Durch das Chiffrat 111 und das Zertifikat 113 werden eine digitale Signatur der Kennzeichendaten 109 gebildet. Beispielsweise wird das Chiffrat 111 durch Verschlüsselung der Kennzeichendaten mit Hilfe eines privaten kryptografischen Schlüssels erzeugt, wobei dieser private kryptografische Schlüssel dem in dem Zertifikat 113 angegebenen öffentlichen Schlüssel zugeordnet sein muss.

Über die Schnittstelle 103 kann ferner ein sogenanntes Root-Zertifikat 178 empfangen werden.

Die Kraftfahrzeug-Anzeigevorrichtung 101 hat einen elektronischen Speicher 115 mit einem Speicherbereich 117 zur Speicherung der Kennzeichendaten und einen Speicherbereich 119 zur Speicherung des Root-Zertifkats 178.

Die Kraftfahrzeug-Anzeigevorrichtung 101 hat ferner einen Prozessor 121 zur Ausführung eines Programmmoduls 123 für die Durchführung einer Signaturprüfung, eines Programmmoduls 125 für die Aktualisierung des Root-Zertifikats 178, welches in dem Speicherbereich 119 gespeichert ist, sowie eines Programmmoduls 127 zur Ansteuerung des Displays 136. Die Funktionalität der Ansteuerung des Displays 136 kann mit Hilfe eines Treibers realisiert sein, welcher Teil des Prozessors 121, als separate Komponente oder als integraler Bestandteil des Displays 136 ausgebildet sein kann.

Das Root-Zertifikat 178 hat eine definierte Gültigkeitsdauer von zum Beispiel drei Jahren. Das aktuelle Root-Zertifikat 178 kann initial beispielsweise herstellerseitig in dem Speicherbereich 119 gespeichert werden, sodass ein mit der Kraftfahrzeug-Anzeigevorrichtung 101 ausgestattetes Kraftfahrzeug bei Auslieferung an den Kunden bereits mit einem gültigen Root-Zertifikat versehen ist.

Dem Kraftfahrzeug wird zum Beispiel von einer Kraftfahrzeug-Meldebehörde ein amtliches Kennzeichen zugeordnet. Die entsprechenden Kennzeichendaten 109 werden mit dem privaten Schlüssel, zum Beispiel der Kraftfahrzeug-Meldestelle, verschlüsselt, sodass das Chiffrat 111 resultiert. Die Nachricht 105 mit den Kennzeichendaten 109, dem Chiffrat 111 sowie dem Zertifikat 113 der Kraftfahrzeug-Meldestelle wird dann von dem Sender 107 an die Schniftstelle 103 der Kraftfahrzeug-Anzeigevorrichtung 101 gesendet. Daraufhin wird das Programmmodul 123 gestartet, um die Signatur der Nachricht 105 zu prüfen. Hierzu werden im Einzelnen die folgenden Prüfungen durchgeführt:
1. Das Chiffrat 111 wird mit Hilfe des in dem Zertifikat 113 angegebenen öffentlichen Schlüssels entschlüsselt. Das Resultat der Entschlüsselung des Chiffrats 111 muss mit den Kennzeichendaten 109 übereinstimmen, damit die Signatur gültig sein kann.
2. Das Zertifikat 113 wird mit Hilfe des in den Speicherbereich 119 gespeicherten Root-Zertifikats 178 einer Zertifikatskettenprüfung unterzogen. Eine erfolgreiche Zertifikatskettenprüfung ist eine weitere Voraussetzung für die Gültigkeit der Signatur.

Wenn die Signatur der Nachricht 105 gültig ist, so werden die Kennzeichendaten 109 in den Speicherbereich 117 geschrieben, wobei hierdurch in dem Speicherbereich 117 unter Umständen zuvor gespeicherte Kennzeichendaten überschrieben werden.

Das Programmmodul 127 wird ständig ausgeführt und greift auf den Speicherbereich 117 zu, in dem die jeweils aktuellen Kennzeichendaten 109 gespeichert sind. Durch die Aktualisierung der Kennzeichendaten in dem Speicherbereich 117 ändert sich also dementsprechend das auf dem Display 136 wiedergegebene amtliche Kennzeichen des Kraftfahrzeugs.

Da das Root-Zertifikat, das in dem Speicherbereich 119 gespeichert ist, nur eine begrenzte Gültigkeitsdauer hat, wird dieses von Zeit zu Zeit aktualisiert. Hierzu wird wie folgt vorgegangen: Wenn von der Schnittstelle 103 ein Root-Zertifikat 178 empfangen wird, so wird durch Ausführung des Programmmoduls 125 das in dem Speicherbereich 119 gespeicherte Root-Zertifikat durch das neu empfangene Root-Zertifikat 178 ersetzt, indem es überschrieben wird.

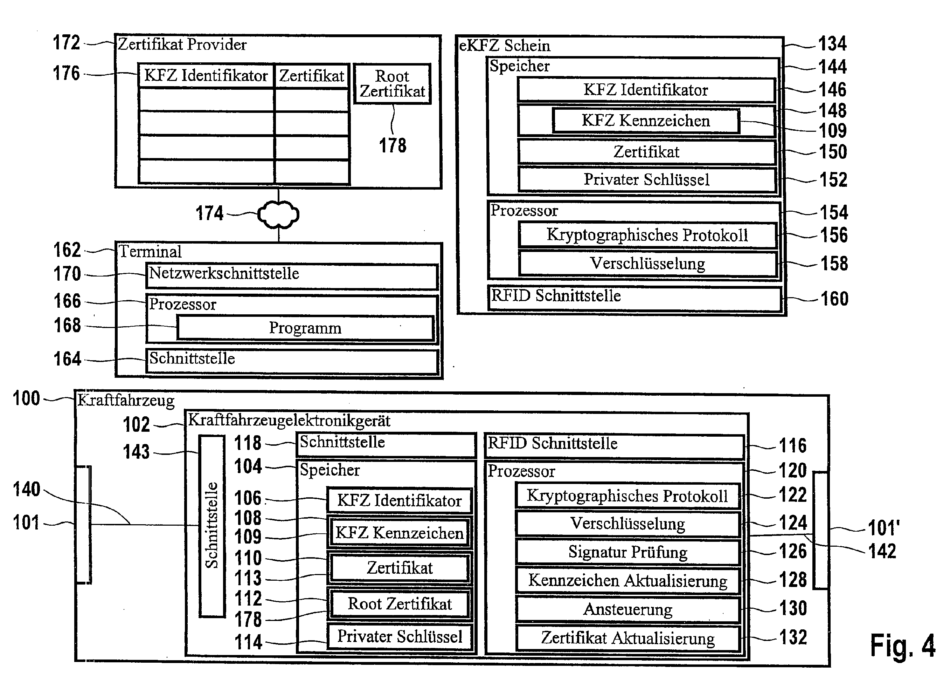

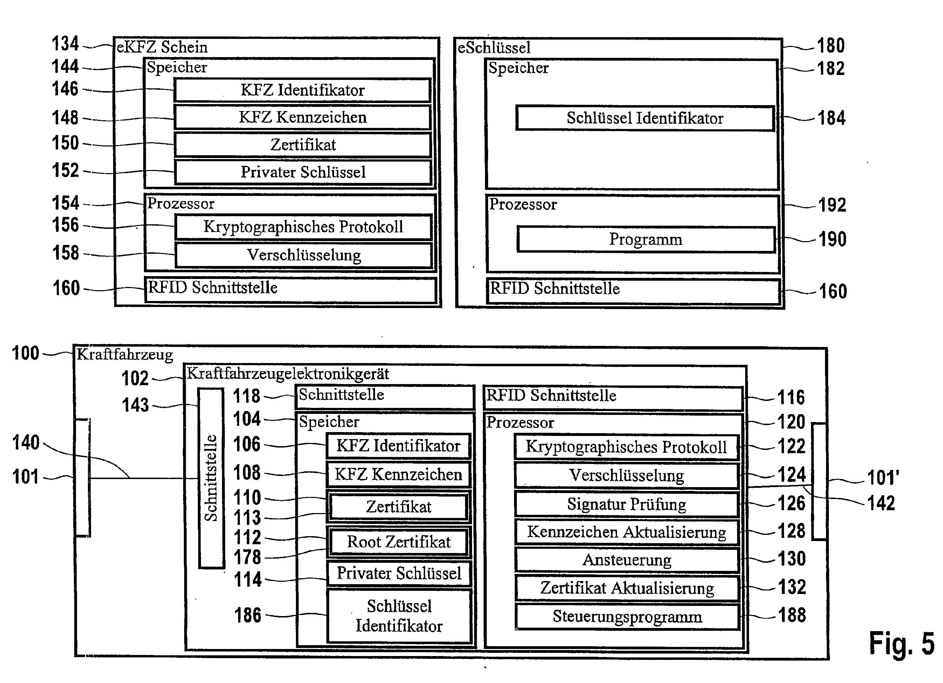

Die Nachricht 105 und das Root-Zertifikat 178 können von demselben Sender 107 oder von unterschiedlichen Sendern 107 empfangen werden. Beispielsweise ist der Sender 107 der Kraftfahrzeug-Meldebehörde zugeordnet; insbesondere kann der Sender 107 als ID-Token 134 (vgl. unten Figuren 4 und 5) ausgebildet sein.

Ein Sender 107 für die Sendung des Root-Zertifikats 178 kann zum Beispiel als Kraftfahrzeug-Elektronikgerät 102 (vgl. die Ausführungsform der Figuren 4 und 5) oder als Terminal 162 zum Beispiel einer Kraftfahrzeug-Werkstatt oder eines Kraftfahrzeug-Prüfinstituts, wie zum Beispiel des Technischen Überwachungsvereins (TÜV) ausgebildet sein, sodass das Root-Zertifikat 178 anlässlich einer Wartung oder einer Hauptuntersuchung an die Schnittstelle 103 gesendet wird.

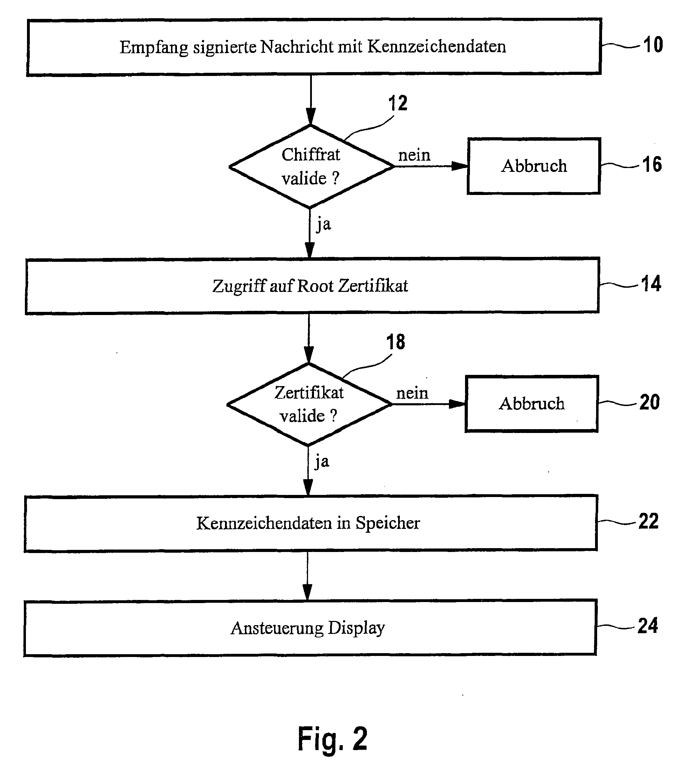

Die Figur 2 zeigt ein Flussdiagramm einer Ausführungsform eines erfindungsgemäßen Verfahrens. In dem Schritt 10 empfängt die Kraftfahrzeug-Anzeigevorrichtung eine signierte Nachricht mit Kennzeichendaten und einer Signatur der Kennzeichendaten, wobei die Signatur aus einem Chiffrat der Kennzeichendaten und einem dazugehörigen Zertifikat gebildet wird.

In dem Schritt 12 wird geprüft, ob das Chiffrat valide ist. Hierzu wird beispielsweise das Chiffrat mit Hilfe des öffentlichen Schlüssels, der in dem Zertifikat der Nachricht angegeben ist, entschlüsselt. Stimmt das Ergebnis der Entschlüsselung mit den Kennzeichendaten der Nachricht überein, so wird das Chiffrat als valide betrachtet und die Ablaufsteuerung geht zu dem Schritt 14 über; im gegenteiligen Fall erfolgt ein Abbruch in dem Schritt 16.

In dem Schritt 14 wird auf das in dem Speicher der Kraftfahrzeug-Anzeigevorrichtung gespeicherte Root-Zertifikat zugegriffen, um in dem Schritt 18 zu prüfen, ob das mit der Nachricht empfangene Zertifikat der Signatur valide ist. Hierzu wird mit Hilfe des Root-Zertifikats eine Zertifikatskettenprüfung durchgeführt. Wenn das Zertifikat nicht valide ist, so erfolgt in dem Schritt 20 ein Abbruch.

Wenn das Zertifikat valide ist, so werden in dem Schritt 22 die mit der Nachricht empfangenen Kennzeichendaten in den Speicher der Kraftfahrzeug-Anzeigevorrichtung gespeichert, um damit in dem Schritt 24 ein Display der Kraftfahrzeug-Anzeigevorrichtung anzusteuern, sodass die aktualisierten Kennzeichen-daten von dem Display wiedergegeben werden.

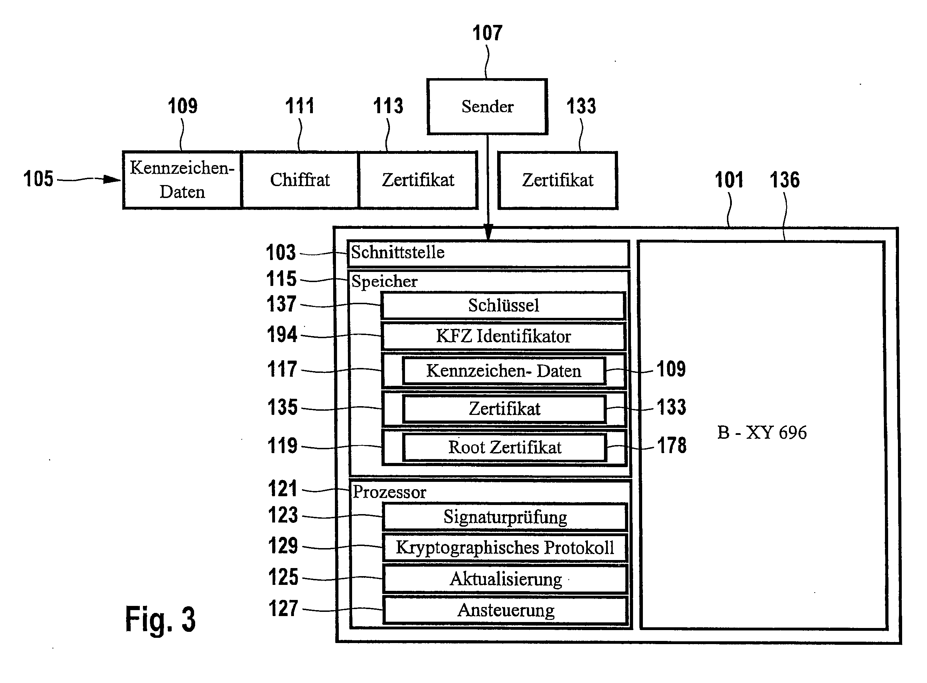

Die Figur 3 zeigt ein Blockdiagramm einer Ausführungsform einer erfindungsgemäßen Kraftfahrzeug-Anzeigevorrichtung 101, der ein Zertifikat 133 zugeordnet ist. Der elektronische Speicher 115 der Kraftfahrzeug-Anzeigevorrichtung 101 hat einen Speicherbereich 135 zur Speicherung des Zertifikats 133. Wie das Root-Zertifikat 178 (vgl. Figur 1) so hat auch das Zertifikat 133 eine begrenzte Gültigkeitsdauer. Vorzugsweise sind die Gültigkeitsdauern des Root-Zertifikats 178 und des Zertifikats 133 so gewählt, dass sie zum gleichen Zeitpunkt ablaufen. Hierdurch kann die Häufigkeit der Aktualisierungen minimiert werden.

In dem elektronischen Speicher 115 der Kraftfahrzeug-Anzeigevorrichtung 101 ist in einem geschützten Speicherbereich 137 ein privater Schlüssel der Kraftfahrzeug-Anzeigevorrichtung 101 gespeichert. Das Zertifikat 133 ist diesem privaten Schlüssel zugeordnet, da das Zertifikat 133 einen öffentlichen Schlüssel beinhaltet, wobei durch den privaten und den öffentlichen Schlüssel ein asymmetrisches Schlüsselpaar gebildet wird.

Der Prozessor 121 dient ergänzend zu der Ausführungsform der Figur 1 zur Ausführung eines Programmmoduls 129, durch welches die die Kraftfahrzeug-Anzeigevorrichtung 101 betreffende Schritte eines kryptografischen Protokolls implementiert werden. Durch Ausführung des kryptografischen Protokolls kann eine einseitige oder eine gegenseitige Authentifizierung der Kraftfahrzeug-Anzeigevorrichtung 101 und des Senders 107 durchgeführt werden, beispielsweise nach einem sogenannten Challenge-Response-Verfahren.

Das Zertifikat 133 kann initial herstellerseitig in dem Speicherbereich 135 gespeichert werden, sodass das Zertifikat 133 bei Auslieferung des neuen Kraftfahrzeugs an den Kunden bereits in dem Speicher 115 gespeichert ist.

Wenn bei der hier betrachteten Ausführungsform eine Initialisierung oder Aktualisierung der Kennzeichendaten erfolgen soll, muss zunächst eine einseitige oder eine gegenseitige Authentifizierung durchgeführt werden. Hierzu wird beispielsweise wie folgt vorgegangen:

Das Programmmodul 129 greift auf das in den Speicherbereich 135 gespeicherte Zertifikat 133 zu, um es von der Schnittstelle 103 an den Sender 107 zu senden. Von dem Sender 107 wird dann eine sogenannte Challenge generiert, d.h. beispielsweise eine Zufallszahl. Diese Zufallszahl wird mit dem in dem Zertifikat 133 beinhalteten öffentlichen Schlüssel verschlüsselt.

Das resultierende Chiffrat wird von dem Sender 107 an die Schnittstelle 103 gesendet. Das Programmmodul 129 entschlüsselt das Chiffrat mit Hilfe des in dem Speicherbereich 137 gespeicherten privaten Schlüssels und erhält so die Zufallszahl. Diese Zufallszahl sendet das Programmmodul 129 über die Schnittstelle 103 an den Sender 107 zurück. Senderseitig wird dann geprüft, ob die von der Kraftfahrzeug-Anzeigevorrichtung empfangene Zufallszahl mit der ursprünglich generierten Zufallszahl, d.h. der Challenge, übereinstimmt. Ist dies der Fall, so gilt die Kraftfahrzeug-Anzeigevorrichtung 101 als gegenüber dem Sender 107 authentifiziert. In analoger Art und Weise kann eine Authentifizierung des Senders 107 gegenüber der Kraftfahrzeug-Anzeigevorrichtung 101 erfolgen.

Erst nachdem die einseitige oder gegenseitige Authentifizierung erfolgt ist, ist die Schnittstelle 103 für den Empfang der Nachricht 105 empfangsbereit.

Zur Aktualisierung des Zertifikats 133 wird wie folgt vorgegangen:

Der Sender 107 sendet das aktualisierte Zertifikat 133 an die Schnittstelle 103. Durch die Ausführung des Programmmoduls 125 wird dann das aktualisierte Zertifikat 133 in den Speicherbereich 135 geschrieben, wobei das vorherige Zertifikat überschrieben wird. Der öffentliche Schlüssel des Zertifikats 133 bleibt dabei unverändert, da auch der in dem Speicherbereich 137 gespeicherte private Schlüssel unverändert bleiben soll.

Zusätzlich kann die Nachricht 105 eine Kennung beinhalten, die ebenfalls signiert sein kann. Bei dieser Kennung kann es sich um den in dem Speicherbereich 194 eines Kraftfahrzeug-Elektronikgeräts 102 (vgl. die Ausführungsform der Figur 4 und 5) gespeicherten Kraftfahrzeug-Identifikator handeln. Zusätzlich zu der Validität der Signatur wird dann seitens der Kraftfahrzeug-Anzeigevorrichtung 101 geprüft, ob die mit der Nachricht 105 empfangene Kennung mit dem in den Speicherbereich 194 der Kraftfahrzeug-Anzeigevorrichtung 101 gespeicherten Kraftfahrzeug-Identifikator übereinstimmt. Dies kann eine weitere notwendige Voraussetzung dafür sein, dass die Kennzeichendaten in den Speicherbereich 117 geschrieben werden.

Die Figur 4 zeigt schematisch ein Kraftfahrzeug 100, wie zum Beispiel einen Personenkraftwagen. Das Kraftfahrzeug 100 hat zumindest ein Kraftfahrzeug-Elektronikgerät 102, welches beispielsweise als sogenannte Electronic Control Unit (ECU) ausgebildet sein kann.

Das Kraftfahrzeug-Elektronikgerät 102 hat einen elektronischen Speicher 104 mit zumindest den Speicherbereichen 106, 108, 110, 112 und 114. Der Speicherbereich 106 dient zur Speicherung eines Kraftfahrzeug-Identifikators, d.h. eines sogenannten Unique Identifiers, wie zum Beispiel der Fahrgestellnummer des Kraftfahrzeugs 100. Vorzugsweise ist der Speicherbereich 106 so ausgebildet, dass der dort gespeicherte Kraftfahrzeug-Identifkator nicht geändert werden kann, sodass also das Kraftfahrzeug-Elektronikgerät 102 dem Kraftfahrzeug 100 fest zugeordnet ist.

Der Speicherbereich 108 dient zur Speicherung von Daten, die das amtliche Kraftfahrzeug-Kennzeichen des Kraftfahrzeugs 100 beinhalten, d.h. der Kennzeichendaten 109 (vgl. Fig. 1 und 3). Diese Daten können über eine Schnittstelle 116 des Kraftfahrzeug-Elektronikgeräts 102 aktualisiert werden. Die Schnittstelle 116 ist bei der hier betrachteten Ausführungsform kontaktlos als Funk-Schnittstelle ausgebildet, die nach einem RFID-Verfahren arbeitet.

Der Speicherbereich 110 dient zur Speicherung eines Zertifikats 113 des Kraftfahrzeugs 100, wobei es sich bei dem Zertifikat beispielsweise um ein standardisiertes Zertifikat einer PKI handeln kann. Der Speicherbereich 112 dient zur Speicherung des Root Zertifikats 178 der PKI.

In dem Speicherbereich 114 des Speichers 104 ist der zu dem Zertifikat 113 gehörende private Schlüssel des Kraftfahrzeugs 100 gespeichert. Auf diesen Speicherbereich 114 ist ein externer Zugriff über die Schnittstelle 116 oder über eine weitere Schnittstelle 118 des Kraftfahrzeug-Elektronikgeräts 102 prinzipiell nicht möglich.

Die Schnittstelle 118 ist zum Beispiel kontaktbehaftet zum Anschluss eines Kabels ausgebildet. Über die Schnittstelle 118 kann ein externer Zugriff auf die Speicherbereiche 110 und 112 erfolgen, um das Zertifikat 1113, das Zertifikat 133 und/oder das Root-Zertifikat 178 zu aktualisieren.

Das Kraftfahrzeug-Elektronikgerät 102 hat ferner zumindest einen Prozessor 120 zur Ausführung von Programmmodulen 122, 124, 126, 128, 130 und 132.

Das Programmmodul 122 dient zur Ausführung der das Kraftfahrzeug-Elektronikgerät 102 betreffenden Schritte eines kryptografischen Protokolls zur Authentifizierung des Kraftfahrzeug-Elektronikgeräts 102 gegenüber einem ID-Token 134. Vorzugsweise ist das Programmmodul 122 so ausgebildet, dass auch eine Authentifizierung des ID-Tokens 134 gegenüber dem Kraftfahrzeug-Elektronikgerät 102 erfolgt.

Das Programmmodul 124 dient zur Verschlüsselung von Daten, die zwischen dem Kraftfahrzeug-Elektronikgerät 102 und dem ID-Token 134 ausgetauscht werden. Hierbei kann eine Verschlüsselung mit einem symmetrischen oder einem asymmetrischen Schlüssel erfolgen,

Das Programmmodul 126 dient zur Durchführung einer Signaturprüfung einer von dem ID-Token 134 empfangenen elektronischen Signatur. Hierzu greift das Programmmodul 126 auf den Speicherbereich 112 zu, um dort das Root-Zertifikat 178 abzurufen.

Das Programmmodul 128 wird zur Aktualisierung der in dem Speicherbereich 108 gespeicherten Daten, welche das amtliche Kraftfahrzeug-Kennzeichen beinhalten, gestartet. Das Programmmodul 130 dient zur Ansteuerung der Kraftfahrzeug-Anzeigevorrichtungen 101 und 101' des Kraftfahrzeugs 100. Die Kraftfahrzeug-Anzeigevorrichtungen 101 und 101' können dort an dem Kraftfahrzeug 100 angeordnet sein, wo üblicherweise die Nummernschilder angeordnet sind. Die Kraftfahrzeug-Anzeigevorrichtungen 101 und 101' sind mit dem Kraftfahrzeug-Elektronikgerät 102 über gesicherte Datenübertragungskanäle 140 bzw. 142 verbunden. Beispielsweise können die Datenübertragungskanäle 140 und/oder 142 über ein Bussystem des Kraftfahrzeugs 100 realisiert werden. Hierzu hat das Kraftfahrzeugelektronikgerät 102 eine Schnittstelle 143, über die die Datenübertragungskanäle 140 und 142 mit den Kraftfahrzeug-Anzeigevorrichtungen 101 bzw. 101' hergestellt werden können.

Das Programmmodul 132 wird gestartet, um das in dem Speicherbereich 110 gespeicherte Zertifikat 113 und/oder das in dem Speicherbereich 112 gespeicherte Root-Zertifikat und/oder das Zertifikat 133 über die Schnittstelle 118 zu aktualisieren.

Das Kraftfahrzeug-Elektronikgerät 102 kann als System bestehend aus mehreren räumlich voneinander getrennten elektronischen Komponenten realisiert sein, welche zum Beispiel über ein Bussystem des Kraftfahrzeugs 100 miteinander verbunden sind. Dementsprechend kann auch der Speicher 104 über verschiedene solcher Komponenten, die insgesamt das Kraftfahrzeug-Elektronikgerät 102 bilden, verteilt realisiert sein. Entsprechendes gilt für den Prozessor 120.

Der ID-Token 134 hat einen elektronischen Speicher 144 mit geschützten Speicherbereichen 146, 148, 150 und 152. Der Speicherbereich 146 dient zur Speicherung des Kraftfahrzeug-Identifikators, der auch in dem Speicherbereich 106 des Speichers 104 des Kraftfahrzeug-Elektronikgeräts 102 gespeichert ist. Hierdurch ist der ID-Token 134 dem Kraftfahrzeug 100 eindeutig zugeordnet. In dem Speicherbereich 146 kann zusätzlich eine Signatur des Kraftfahrzeug-Identifikators gespeichert sein.

In dem Speicherbereich 148 sind die Kennzeichendaten 109 gespeichert, die das aktuelle amtliche Kraftfahrzeug-Kennzeichen des Kraftfahrzeugs 100 beinhalten. Zusätzlich kann in dem Speicherbereich 148 eine digitale Signatur dieser Daten 109 gespeichert sein. Diese Daten 109 können von einem Servercomputer der Kraftfahrzeug-Meldestelle in den Speicherbereich 148 geschrieben worden sein.

Der Speicherbereich 150 dient zur Speicherung eines Zertifikats des ID-Tokens 134. Der Speicherbereich 152 dient zur Speicherung eines privaten Schlüssels, dem das in dem Speicherbereich 150 gespeicherte Zertifikat zugeordnet ist.

Der ID-Token 134 hat ferner einen Prozessor 154 zur Ausführung von Programmmodulen 156 und 158, die den Programmmodulen 122 und 124 entsprechen. Das Programmmodul 156 dient zur Ausführung derjenigen Schritte des kryptografischen Protokolls, welche den ID-Token 134 betreffen. Das Programmmodul 158 dient zum Aufbau der verschlüsselten Verbindung mit dem Kraftfahrzeug-Elektronikgerät 102, insbesondere einer Verbindung mit Ende-zu-Ende-Verschlüsselung mit Hilfe eines symmetrischen oder asymmetrischen Schlüssels.

Der ID-Token 134 hat ferner eine Schnittstelle 160, die der Schnittstelle 116 des Kraftfahrzeug-Elektronikgeräts 102 entspricht, und beispielsweise als Funkschnittstelle ausgebildet ist, die nach einem RFID-Verfahren arbeitet.

Bei dem ID-Token 134 kann es sich um ein Dokument handeln, wie zum Beispiel einen elektronischen Kraftfahrzeugbrief oder einen elektronischen Kraftfahrzeugschein, wie in der Figur 1 gezeigt. Das Dokument kann zum Beispiel kartenförmig ausgebildet sein.

Das Kraftfahrzeug-Elektronikgerät 102 ist über seine Schnittstelle 118 mit einem Terminal 162 verbindbar. Das Terminal 162 hat eine Schnittstelle 164, die der Schnittstelle 118 des Kraftfahrzeug-Elektronikgeräts 102 entspricht. Die Schnittstellen 164 und 118 können zum Beispiel mit einem Kabel verbunden werden, wozu typischerweise die Motorhaube des Kraftfahrzeugs 100 geöffnet werden muss.

Der Terminal 162 hat zumindest einen Prozessor 166 zur Ausführung eines Programms 168 sowie eine Netzwerk-Schnittstelle 170 zur Kommunikation mit einem Servercomputer 172 über ein Netzwerk 174.

Durch den Servercomputer 172 wird ein Zertifikat-Provider zur Verfügung gestellt, beispielsweise in Form einer Datenbank 176, in der aktuelle Zertifikate für verschiedene Kraftfahrzeuge und deren Kraftfahrzeug-Anzeigevorrichtungen gespeichert sind. Als Zugriffsschlüssel für die in der Datenbank 176 gespeicherten Zertifikate dient dabei der jeweilige Kraftfahrzeug-Identifikator. Zusätzlich kann der Servercomputer 172 auch ein aktualisiertes Root-Zertifikat 178 liefern.

Für eine Aktualisierung des Kraftfahrzeug-Kennzeichens wird so vorgegangen:
1. Zunächst ruft der Benutzer, d.h. zum Beispiel der Halter des Kraftfahrzeugs 100 einen Online-Dienst eines Servercomputers, zum Beispiel einer Kraftfahrzeug-Meldebehörde, auf. Dies kann über einen Personalcomputer des Halters über das Internet erfolgen. Der Personalcomputer hat ein Lesegerät zur Kommunikation mit dem ID-Token 134. Über den Personalcomputer und dessen Lesegerät wird eine gesicherte Verbindung mit dem Server der Kraftfahrzeug-Meldestelle aufgebaut, über die die Daten 109 mit dem aktualisierten Kraftfahrzeug-Kennzeichen und gegebenenfalls deren Signatur in den Speicherbereich 146 des ID-Tokens 134 geschrieben werden.
2. Wenn sich der Benutzer mit dem ID-Token 134 im Empfangsbereich der Schnittstelle 116 befindet, wird das Programmmodul 128 gestartet, um das Kraftfahrzeug-Kennzeichen zu aktualisieren. Dies kann manuell erfolgen, indem der Benutzer ein Bedienelement des Kraftfahrzeugs 100 betätigt, das zum Beispiel an der Instrumententafel des Kraftfahrzeugs 100 angeordnet sein kann. Das Programmmodul 128 kann aber auch ständig ausgeführt werden. Durch Ausführung des Programmmoduls 128 werden dann zyklisch innerhalb gewisser zeitlicher Abstände Signale von der Schnittstelle 116 ausgesendet, um zu prüfen, ob sich im Empfangsbereich der Schnittstelle 116 das ID-Token 134 befindet.

Die Aktualisierung des Kraftfahrzeug-Kennzeichens erfolgt dann so, dass eine Verbindung zwischen den Schnittstellen 116 und 160 hergestellt wird. Beispielsweise greift das Programmmodul 128 auf das in dem Speicherbereich 110 gespeicherte Zertifikat 113 zu, um es von der Schnittstelle 116 an den ID-Token 134 zu senden. Durch das Programmmodul 156 des ID-Tokens 134 wird dann eine sogenannte Challenge generiert, d.h. beispielsweise eine Zufallszahl. Diese Zufallszahl wird mit dem in dem Zertifikat 113 beinhalteten öffentlichen Schlüssel des Kraftfahrzeugs 100 verschlüsselt.

Das resultierende Chiffrat wird von dem ID-Token 134 über die Verbindung an die Schnittstelle 116 des Kraftfahrzeug-Elektronikgeräts 102 gesendet. Das Programmmodul 122 entschlüsselt das Chiffrat mit Hilfe des in dem Speicherbereich 114 gespeicherten privaten Schlüssels des Kraftfahrzeugs 100 und erhält so die Zufallszahl. Diese Zufallszahl sendet das Programmmodul 122 über die Schnittstelle 116 an den ID-Token 134 zurück.

Durch Ausführung des Programmmoduls 156 wird dort geprüft, ob die von dem Kraftfahrzeug-Elektronikgerät 102 empfangene Zufallszahl mit der ursprünglich generierten Zufallszahl, d.h. der Challenge, übereinstimmt. Ist dies der Fall, so gilt das Kraftfahrzeug-Elektronikgerät 102 als gegenüber dem ID-Token 134 authentifiziert. Die Zufallszahl kann als symmetrischer Schlüssel für die Ende-zu-Ende-Verschlüsselung verwendet werden, die von den Programmmodulen 124 bzw. 158 durchgeführt wird.

Optional kann in analoger Art und Weise eine Authentifizierung des ID-Tokens 134 gegenüber dem Kraftfahrzeug-Elektronikgerät 102 erfolgen.

In die einseitige oder gegenseitige Authentisierung kann auch der Kraftfahrzeug-Identifkator, der in den Speicherbereichen 106 bzw. 146 gespeichert ist, mit eingehen. Beispielsweise sendet der ID-Token 134 den von dem ID-Token 134 signierten Kraftfahrzeug-Identifikator an das Kraftfahrzeugelektronik-Gerät 102. Das Kraftfahrzeugelektronik-Gerät 102 prüft dann die Signatur und vergleicht den von dem ID-Token 134 empfangenen Kraftfahrzeug-Identifikator mit dem in dem Speicherbereich 106 gespeicherten Kraftfahrzeug-Identifikator. Wenn die Signatur valide ist und die Kraftfahrzeug-Identifikatoren übereinstimmen, gilt der ID-Token 134 als authentisch.
3. Nachdem die einseitige oder gegenseitige Authentifizierung des Kraftfahrzeug-Elektronikgeräts 102 und des ID-Tokens 134 erfolgt ist, erhält das Kraftfahrzeug-Elektronikgerät 102 eine Leseberechtigung zum Zugriff auf den Speicherbereich 148 des ID-Tokens 134. Das Programmmodul 128 sendet dann ein entsprechendes Lesekommando von der Schnittstelle 116 an den ID-Token 134. Der ID-Token 134 liest daraufhin die Kennzeichen-Daten 109, ggf. einschließlich der Signatur, aus dem Speicherbereich 148 und sendet diese über die Verbindung mit Ende-zu-Ende-Verschlüsselung an die Schnittstelle 116. Das Programmmodul 128 startet dann das Programmmodul 126, um die Signatur der Daten 109 mit Hilfe des Root-Zertifikats 112 zu prüfen. Wenn die Signatur valide ist, werden die Daten in den Speicherbereich 108 gespeichert, wobei die dort zuvor gespeicherten Daten überschrieben werden können.

Durch Ausführung des Programmmoduls 130 wird dann die Nachricht 105 (vgl. Figur 1 und Figur 3) generiert. Dies kann so erfolgen, dass die Kennzeichendaten 109 mit dem privaten Schlüssel, der in dem Speicherbereich 114 gespeichert ist, verschlüsselt werden, um so das Chiffrat 111 zu erzeugen. Diese Nachricht 105 wird dann über die Datenübertragungskanäle 140 und 142 an die Kraftfahrzeug-Anzeigevorrichtungen 101 bzw. 101' gesendet, wo die Kennzeichendaten dementsprechend aktualisiert werden, sodass die aktualisierten Kennzeichendaten auf den Displays der Kraftfahrzeug-Anzeigevorrichtungen 101 und 101' wiedergegeben werden.

Zur Aktualisierung der in den Speicherbereichen 110 und 112 gespeicherten Zertifikate 113 bzw. 178 wird wie folgt vorgegangen:

Zwischen den Schnittstellen 118 und 164 wird zum Beispiel über ein Kabel eine Verbindung hergestellt. Durch Ausführung des Programms 168 wird der Kraftfahrzeug-Identifikator aus dem Speicherbereich 106 des Kraftfahrzeug-Elektronikgeräts 102 ausgelesen. Das Programm 168 generiert dann eine Anforderung für den Servercomputer 172, welche diesen Kraftfahrzeug-Identifikator beinhaltet.

Diese Anforderung sendet das Terminal 162 von seiner Netzwerk-Schnittstelle 170 über das Netzwerk 174 an den Servercomputer 172. Aufgrund dieser Anforderung greift der Servercomputer auf die Datenbank 176 zu, um mit Hilfe des Kraftfahrzeug-Identifikators das dem Kraftfahrzeug-Identifikator zugeordnete aktuelle Zertifikat 113 auszulesen. Das Zertifikat 113 und das aktuelle Root-Zertifikat 178 werden von dem Servercomputer 172 über das Netzwerk 174 an das Terminal 162 gesendet, und von dort durch Ausführung des Programms 168 über die Verbindung zwischen der Schnittstelle 164 und der Schnittstelle 118 zu dem Kraftfahrzeug-Elektronikgerät 102 übertragen, wo das aktuelle Zertifikat 113 in den Speicherbereich 110 und das aktuelle Root-Zertifikat 178 in dem Speicherbereich 112 gespeichert werden, indem die dort jeweils zuvor gespeicherten Zertifikate überschrieben werden.

Das Terminal kann beispielsweise zu einer Werkstatt gehören, die auf diese Art und Weise die Zertifikate anlässlich einer turnusmäßigen Wartung des Kraftfahrzeugs 100 aktualisiert. Der Terminal kann auch zu einer Prüfstelle, wie zum Beispiel dem Technischen Überprüfungsverein (TÜV) gehören, welcher die Aktualisierung der Zertifikate anlässlich einer sogenannten Hauptuntersuchung vornimmt.

In einer alternativen Ausführungsform ist die Schnittstelle 118 so ausgebildet, dass sie unmittelbar mit dem Servercomputer 172 kommunizieren kann, wie zum Beispiel über eine Mobilfunkverbindung.

In der Datenbank 176 können neben den aktuellen Zertifikaten 113 auch die aktuellen Zertifikate 133 der Kraftfahrzeug-Anzeigevorrichtungen der Kraftfahrzeuge gespeichert sein. Dann werden neben dem aktuellen Zertifikat 113 und dem aktuellen Root-Zertifikat 178 auch die aktuellen Zertifikate 133 und 133' der Kraftfahrzeug-Anzeigevorrichtungen 101 bzw. 101' des Kraftfahrzeugs 100 mit der Schnittstelle 118 empfangen. Das Kraftfahrzeug-Elektronikgerät 102 leitet dann das Root-Zertifikat 178 über die Datenübertragungskanäle 140 und 142 an die Kraftfahrzeug-Anzeigevorrichtungen 101 bzw. 101' weiter, um die dort gespeicherten Root-Zertifikate zu aktualisieren (vgl. Ausführungsform der Figur 1).

Ferner leitet das Kraftfahrzeug-Elektronikgerät 102 auch die aktualisierten Zertifikate 133 und 133' über die Datenübertragungskanäle 140 und 142 an die Kraftfahrzeug-Anzeigevorrichtungen 101 bzw. 101' weiter, sodass die dort gespeicherten Zertifikate jeweils aktualisiert werden (vgl. Ausführungsform der Figur 3).

Die Figur 5 zeigt eine weitere Ausführungsform der Erfindung. Zusätzlich zu der Ausführungsform der Figur 4 ist die Schnittstelle 116 des Kraftfahrzeug-Elektronikgeräts 102 dazu ausgebildet, mit einer entsprechenden Schnittstelle 160 eines weiteren ID-Tokens 180 zu kommunizieren. Der ID-Token 180 kann zum Beispiel als elektronischer Schlüssel ausgebildet sein. Der ID-Token 180 hat einen Speicher 182 zur Speicherung eines Schlüssel-Identifikators 184 des ID-Tokens 180. Bei dem Schlüssel-Identifikator handelt es sich um einen Identifikator, durch den der ID-Token 180 eindeutig oder nahezu eindeutig identifiziert wird.

Ein Referenzwert für diesen Schlüssel-Identifikator 184 ist in einem Speicherbereich 186 des Kraftfahrzeug-Elektronikgeräts 102 gespeichert.

Der Prozessor 120 des Kraftfahrzeug-Elektronikgeräts 102 dient hier zusätzlich zur Ausführung eines Steuerungsprogramms 188.

Durch Ausführung des Steuerungsprogramms 188 werden zyklisch Signale von der Schnittstelle 116 abgegeben. Wenn sich der ID-Token 180 in der Reichweite der Schnittstelle 116 befindet, so antwortet der ID-Token 180 auf ein solches Signal mit der Übertragung des Schlüssel-Identifikators 184 an die Schnittstelle 116, was durch Ausführung des Programms 190 von dem Prozessor 192 erfolgt. Das Steuerungsprogramm 188 prüft dann den über die Schnittstelle 116 empfangenen Schlüssel-Identifikator 184 mit dem in dem Speicherbereich 186 gespeicherten Referenzwert. Bei Übereinstimmung steuert das Steuerungsprogramm 188 eine Zentralverriegelung des Kraftfahrzeugs 100 an, um die Öffnung der Türen freizugeben. Alternativ oder zusätzlich kann das Steuerungsprogramm 188 die Betätigung des Anlassers des Kraftfahrzeugs 100 freigeben.

Wenn sich neben dem ID-Token 180 auch der ID-Token 134 innerhalb der Reichweite der Schnittstelle 116 befindet, so startet das Steuerungsprogramm 188 das Programmmodul 128 für die Aktualisierung des Kennzeichens.

### Bezugszeichenliste

- 100: Kraftfahrzeug
- 101: Kraftfahrzeug-Anzeigevorrichtung
- 102: Kraftfahrzeug-Elektronikgerät
- 103: Schnittstelle
- 104: Speicher
- 105: Nachricht
- 106: Speicherbereich
- 107: Sender
- 108: Speicherbereich
- 109: Kennzeichendaten
- 110: Speicherbereich
- 111: Chiffrat
- 112: Speicherbereich
- 113: Zertifikat
- 114: Speicherbereich
- 115: elektronischer Speicher
- 116: Schnittstelle
- 117: Speicherbereich
- 118: Schnittstelle
- 119: Speicherbereich
- 120: Prozessor
- 121: Prozessor
- 122: Programmmodul
- 123: Programmmodul
- 124: Programmmodul
- 125: Programmmodul
- 126: Programmmodul
- 127: Programmmodul
- 128: Programmmodul
- 129: Programmmodul
- 130: Programmmodul
- 132: Programmmodul
- 133: Zertifikat
- 134: ID-Token
- 135: Speicherbereich
- 136: Display
- 137: Speicherbereich
- 138: Display
- 140: Datenübertragungskanal
- 142: Datenübertragungskanal
- 143: Schnittstelle
- 144: Speicher
- 146: Speicherbereich
- 148: Speicherbereich
- 150: Speicherbereich
- 152: Speicherbereich
- 154: Prozessor
- 156: Programmmodul
- 158: Programmmodul
- 160: Schnittstelle
- 162: Terminal
- 164: Schnittstelle
- 166: Prozessor
- 168: Programm
- 170: Netzwerk-Schnittstelle
- 172: Servercomputer
- 174: Netzwerk
- 176: Datenbank
- 178: Root-Zertifikat
- 180: ID-Token
- 182: Speicher
- 184: Schlüssel-Identifikator
- 186: Speicherbereich
- 188: Steuerungsprogramm
- 190: Programms
- 192: Prozessor
- 194: Speicherbereich

## Patentansprüche

1. Kraftfahrzeug-Anzeigevorrichtung mit einem elektronischen Gerät beinhaltend:
- einen ersten Speicherbereich (117) zur Speicherung von Daten (109),
- einen zweiten Speicherbereich (119) zur Speicherung zumindest eines ersten Zertifikats (178),
- eine erste Schnittstelle (103) zum Empfang der Daten, einer Signatur der Daten und des zumindest ersten Zertifikats von einem Sender (107),
- Mittel (123) zur Prüfung der Gültigkeit der Signatur der Daten mit Hilfe des ersten Zertifikats, wobei die Daten nur dann in den ersten Speicherbereich gespeichert werden, wenn die Signatur gültig ist,
- Mittel (127) zur Ansteuerung einer Anzeigevorrichtung (136) zur Wiedergabe der in dem ersten Speicherbereich gespeicherten Daten,
und mit der Anzeigevorrichtung (136), wobei die Anzeigevorrichtung und das elektronische Gerät eine bauliche Einheit bilden.

2. Kraftfahrzeug-Anzeigevorrichtung nach Anspruch 1, wobei die Mittel zur Prüfung der Gültigkeit der Signatur zur Durchführung einer Zertifikatskettenprüfung mit Hilfe des ersten Zertifikats ausgebildet sind.

3. Kraftfahrzeug-Anzeigevorrichtung nach Anspruch 1 oder 2, wobei es sich bei dem elektronischen Gerät um eine integrierte elektronische Schaltung handelt.

4. Kraftfahrzeug-Anzeigevorrichtung nach Anspruch 1, 2 oder 3, wobei das elektronische Gerät und die Anzeigevorrichtung untrennbar miteinander verbunden sind, und wobei es sich bei der ersten Schnittstelle um eine Funk-Schnittstelle handelt.

5. Kraftfahrzeug-Anzeigevorrichtung nach einem der vorhergehenden Ansprüche, wobei die erste Schnittstelle zum Empfang von einem Kraftfahrzeug-Elektronikgerät (102) ausgebildet ist, wobei es sich bei der ersten Schnittstelle um eine Kraftfahrzeug-Bussystem-Schnittstelle handelt.

6. Kraftfahrzeug-Anzeigevorrichtung nach einem der vorhergehenden Ansprüche, mit Mitteln (129) zur kryptografischen Authentifizierung des Senders, wobei die Speicherung der Daten (109) in dem ersten Speicherbereich voraussetzt, dass die kryptografische Authentifizierung des Senders erfolgreich durchgeführt worden ist.

7. Kraftfahrzeug-Anzeigevorrichtung nach Anspruch 6, wobei in einem dritten Speicherbereich (135) des elektronischen Geräts ein zweites Zertifikat (133) gespeichert ist, wobei das zweite Zertifikat (133) dem elektronischen Gerät zugeordnet ist, und wobei die Mittel zur kryptografischen Authentifizierung zur gegenseitige Authentifizierung ausgebildet sind, wobei die Authentifizierung der Kraftfahrzeug-Anzeigevorrichtung gegenüber dem Sender mit Hilfe des zweiten Zertifikats erfolgt.

8. Kraftfahrzeug-Anzeigevorrichtung nach einem der vorhergehenden Ansprüche, wobei die Daten ein Kraftfahrzeug-Kennzeichen beinhalten.

9. Kraftfahrzeug-Anzeigevorrichtung nach einem der vorhergehenden Ansprüche, mit einem vierten Speicherbereich (194) zur Speicherung eines Kraftfahrzeug-Identifikators, wobei der Kraftfahrzeug-Identifikator ein Kraftfahrzeug eindeutig identifiziert, welchem die Kraftfahrzeug-Anzeigevorrichtung zugeordnet ist, wobei es sich bei dem vierten Speicherbereich um einen geschützten Speicherbereich handelt, wobei die erste Schnittstelle zum Empfang einer Nachricht (105) ausgebildet ist, wobei die Nachricht zumindest die Daten, eine Kennung und die Signatur der Daten und/oder der Kennung beinhaltet, und mit Mitteln (121) zur Prüfung, ob die Kennung mit dem in den vierten Speicherbereich gespeicherten Kraftfahrzeug-Identifikator übereinstimmt, wobei Voraussetzung für die Speicherung der Daten in dem ersten Speicherbereich ist, dass die Kennung und der Kraftfahrzeug-Identifikator übereinstimmen.

10. Kraftfahrzeug-Elektroniksystem mit zumindest einer Kraftfahrzeug-Anzeigevorrichtung (101, 101') nach einem der vorhergehenden Ansprüche und mit einem Kraftfahrzeug-Elektronikgerät (102) mit
- einer zweiten Schnittstelle (116) zum Aufbau einer ersten Verbindung zu einem ersten ID-Token (134), um aus dem ersten ID-Token Daten (109) auszulesen,
- einem fünften Speicherbereich (112) zur Speicherung des ersten Zertifikats (178),
- einem sechsten Speicherbereich (110) zur Speicherung eines dritten Zertifikats (113), wobei das dritte Zertifikat dem Kraftfahrzeug-Elektronikgerät zugeordnet ist,
- Mitteln (122) zur kryptografischen Authentifizierung gegenüber dem ersten ID-Token mit Hilfe des ersten und/oder des dritten Zertifikats,
- einer dritten Schnittstelle (118) zur Empfang der zumindest ersten, zweiten und dritten Zertifikate,
- einer vierten Schnittstelle (143) zur Ansteuerung zumindest einer der Kraftfahrzeuganzeigevorrichtungen (101, 101') über die erste Schnittstelle (103) zur Aktualisierung der Daten und der ersten und zweiten Zertifikate.

11. Kraftfahrzeug mit zumindest einer von außen sichtbar angeordneten Kraftfahrzeug-Anzeigevorrichtung (101, 101') nach einem der vorhergehenden Ansprüche 1 bis 9.

12. Verfahren zur Anzeige von Daten (109) auf einer Kraftfahrzeug-Anzeigevorrichtung (101, 101') mit folgenden Schritten:
- Empfang der Daten und einer Signatur der Daten mit einer ersten Schnittstelle (103),
- Prüfung der Gültigkeit der Signatur mit Hilfe eines ersten Zertifikats (178), welches in einem zweiten Speicherbereich (119) gespeichert ist,
- Speicherung der Daten in einem ersten Speicherbereich (117), wenn die Signatur gültig ist,
- Ansteuerung einer Anzeigevorrichtung (136) zur Anzeige der Daten.

13. Verfahren nach Anspruch 12, wobei Voraussetzung für die Speicherung der Daten in den ersten Speicherbereich ist, dass eine Authentifizierung eines Senders (107), von dem die Daten und deren Signatur empfangen worden sind, erfolgreich durchgeführt worden ist, wobei eine Voraussetzung für die Speicherung der Daten in dem ersten Speicherbereich zusätzlich ist, dass eine Authentifizierung der Kraftfahrzeug-Anzeigevorrichtung gegenüber dem Sender erfolgreich durchgeführt worden ist.

14. Verfahren nach einem der vorhergehenden Ansprüche 12 bis 13, wobei es sich bei dem Sender um ein Kraftfahrzeug-Elektronikgerät (102) handelt, und wobei das Kraftfahrzeug-Elektronikgerät die Daten von einem ID-Token (134) mit den folgenden Schritten empfängt:
- Aufbau einer ersten Verbindung zwischen dem Kraftfahrzeug-Elektronikgerät (102) und dem ID-Token,
- Zugriff auf einen Speicher (104) des Kraftfahrzeug-Elektronikgeräts zum Lesen eines dritten Zertifikats (113),
- kryptografische Authentifizierung des Kraftfahrzeug-Elektronikgeräts gegenüber dem ID-Token mit Hilfe des Zertifikats (113),
- Auslesen der Daten aus dem ersten ID-Token über die erste Verbindung, nachdem die Authentifizierung des Kraftfahrzeug-Elektronikgeräts gegenüber dem ersten ID-Token erfolgreich durchgeführt worden ist,
- Senden der Daten von dem Kraftfahrzeug-Elektronikgerät an die Kraftfahrzeug-Anzeigevorrichtung zur Aktualisierung der von der Kraftfahrzeug-Anzeigevorrichtung wiedergegebenen Daten.

15. Computerprogrammprodukt mit ausführbaren Programminstruktionen zur Durchführung eines Verfahrens nach einem der vorhergehenden Ansprüche 12 bis 14.

## Claims

1. Motor vehicle display apparatus having an electronic appliance containing:
- a first memory area (117) for storing data (109),
- a second memory area (119) for storing at least one first certificate (178),
- a first interface (103) for receiving the data,
a signature for the data and the at least first certificate from a transmitter (107),
- means (123) for checking the validity of the signature of the data using the first certificate, wherein the data are stored in the first memory area only if the signature is valid,
- means (127) for actuating a display apparatus (136) to reproduce the data stored in the first memory area,
and with the display apparatus (136), wherein the display apparatus and the electronic appliance from a physical unit.

2. Motor vehicle display apparatus according to Claim 1, wherein the means for checking the validity of the signature are designed to perform a certificate chain check using the first certificate.

3. Motor vehicle display apparatus according to Claim 1 or 2, wherein the electronic appliance is an integrated electronic circuit.

4. Motor vehicle display apparatus according to Claim 1, 2 or 3, wherein the electronic appliance and the display apparatus are inseparably connected to one another and wherein the first interface is a radio interface.

5. Motor vehicle display apparatus according to one of the preceding claims, wherein the first interface is designed to receive from a motor vehicle electronics appliance (102), wherein the first interface is a motor vehicle bus system interface.

6. Motor vehicle display apparatus according to one of the preceding claims, having means (129) for cryptographically authenticating the transmitter, wherein the storage of the data (109) in the first memory area presupposes that the cryptographic authentication of the transmitter has been performed successfully.

7. Motor vehicle display apparatus according to Claim 6, wherein a third memory area (135) of the electronic appliance stores a second certificate (133), wherein the second certificate (133) is associated with the electronic appliance, and wherein the means for cryptographical authentication are designed to authenticate one another, the motor vehicle display apparatus being authenticated to the transmitter using the second certificate.

8. Motor vehicle display apparatus according to one of the preceding claims, wherein the data contain a motor vehicle licence number.

9. Motor vehicle display apparatus according to one of the preceding claims, having a fourth memory area (194) for storing a motor vehicle identifier, wherein the motor vehicle identifier explicitly identifies a motor vehicle with which the motor vehicle display apparatus is associated, wherein the fourth memory area is a protected memory area, wherein the first interface is designed to receive a message (105), wherein the message contains at least the data, a tag and the signature of the data and/or of the tag, and having means (121) for checking whether the tag matches the motor vehicle identifier stored in the fourth memory area, a prerequisite for the storage of the data in the first memory area being that the tag and the motor vehicle identifier match.

10. Motor vehicle electronics system having at least one motor vehicle display apparatus (101, 101') according to one of the preceding claims and having a motor vehicle electronics appliance (102) having
- a second interface (116) for setting up a first connection to a first ID token (134) in order to read data (109) from the first ID token,
- a fifth memory area (112) for storing the first certificate (178),
- a sixth memory area (110) for storing a third certificate (113), wherein the third certificate is associated with the motor vehicle electronics appliance,
- means (122) for cryptographic authentication to the first ID token using the first and/or the third certificate,
- a third interface (118) for receiving the at least first, second and third certificates,
- a fourth interface (143) for actuating at least one of the motor vehicle display apparatuses (101, 101') via the first interface (103) for the purpose of updating the data and the first and second certificates.

11. Motor vehicle having at least one motor vehicle display apparatus (101, 101') according to one of the preceding Claims 1 to 9 which is arranged so as to be visible from the outside.

12. Method for the display of data (109) on a motor vehicle display apparatus (101, 101'), having the following steps:
- the data and a signature for the data are received using a first interface (103),
- the validity of the signature is checked using a first certificate (178), which is stored in a second memory area (119),
- the data are stored in a first memory area (117) if the signature is valid,
- a display apparatus (136) is actuated to display the data.

13. Method according to Claim 12, wherein a prerequisite for the storage of the data in the first memory area is that authentication of a transmitter (107) from which the data and the signature thereof have been received has been performed successfully, a prerequisite for the storage of the data in the first memory area additionally being that authentication of the motor vehicle display apparatus to the transmitter has been performed successfully.

14. Method according to one of the preceding Claims 12 to 13, wherein the transmitter is a motor vehicle electronics appliance (102), and wherein the motor vehicle electronics appliance receives the data from an ID token (134) using the following steps:
- a first connection is set up between the motor vehicle electronics appliance (102) and the ID token,
- a memory (104) in the motor vehicle electronics appliance is accessed for the purpose of reading a third certificate (113),
- the motor vehicle electronics appliance is cryptographically authenticated to the ID token using the certificate (113),
- the data are read from the first ID token via the first connection after the authentication of the motor vehicle electronics appliance to the first ID token has been performed successfully,
- the data are sent from the motor vehicle electronics appliance to the motor vehicle display apparatus in order to update the data reproduced by the motor vehicle display apparatus.

15. Computer program product having executable program instructions for carrying out a method according to one of the preceding Claims 12 to 14.

## Revendications

1. Dispositif d'affichage pour véhicules à moteur avec un appareil électronique contenant :
- un premier espace de mémoire (117) pour la mémorisation de données (109),
- un deuxième espace de mémoire (119) pour la mémorisation d'au moins une premier certificat (178),
- une première interface (103) pour la réception des données, d'une signature des données et d'au moins un premier certificat de la part d'un émetteur (107),
- des moyens (123) pour la vérification de la validité de la signature des données à l'aide du premier certificat, les données n'étant mémorisées dans le premier espace de mémoire que lorsque la signature est valide,
- des moyens (127) pour la commande d'un dispositif d'affichage (136) pour la lecture des données mémorisées dans le premier espace de mémoire,
et avec le dispositif d'affichage (136), le dispositif d'affichage et l'appareil électronique formant une unité de construction.

2. Dispositif d'affichage pour véhicules à moteur selon la revendication 1, dans lequel les moyens pour la vérification de la validité de la signature sont développés pour l'exécution d'une vérification de la chaîne de certificats à l'aide du premier certificat.

3. Dispositif d'affichage pour véhicules à moteur selon la revendication 1 ou 2, dans lequel l'appareil électronique est un circuit intégré électronique.

4. Dispositif d'affichage pour véhicules à moteur selon la revendication 1, 2 ou 3, dans lequel l'appareil électronique et le dispositif d'affichage sont reliés l'un à l'autre de manière indissociable, et dans lequel la première interface est une interface sans fil.

5. Dispositif d'affichage pour véhicules à moteur selon une des revendications précédentes, dans lequel la première interface est développée pour la réception d'un appareil électronique (102) de véhicules à moteur, dans lequel la première interface est une interface d'un système de bus de véhicules à moteur.

6. Dispositif d'affichage pour véhicules à moteur selon une des revendications précédentes, avec des moyens (129) pour l'authentification cryptographique de l'émetteur, dans lequel la mémorisation des données (109) dans le premier espace de mémoire présuppose que l'authentification cryptographique de l'émetteur a été effectuée avec succès.

7. Dispositif d'affichage pour véhicules à moteur selon la revendication 6, dans lequel un deuxième certificat (133) est mémorisé dans un troisième espace de mémorisation (135) de l'appareil électronique, dans lequel le deuxième certificat (133) est affecté à l'appareil électronique, et dans lequel les moyens pour l'authentification cryptographique sont développés pour l'authentification mutuelle, dans lesquels l'authentification du dispositif d'affichage pour véhicules à moteur vis-à-vis de l'émetteur s'effectue à l'aide du deuxième certificat.

8. Dispositif d'affichage pour véhicules à moteur selon une des revendications précédentes, dans lequel les données comportent une identification du véhicule à moteur.

9. Dispositif d'affichage pour véhicules à moteur selon une des revendications précédentes, avec un quatrième espace de mémorisation (194) pour la mémorisation d'une identification du véhicule à moteur, dans lequel l'identification du véhicule à moteur identifie de manière univoque un véhicule à moteur, auquel le dispositif d'affichage pour véhicules à moteur est affecté, dans lequel le quatrième espace de mémorisation concernant un espace de mémorisation protégé, dans lequel la première interface est développée pour la réception d'une information (105), l'information comportant au moins les données, un indicatif et la signature des données et/ou de l'indicatif, et les moyens (121) pour vérifier si l'indicatif coïncide avec l'identification du véhicule à moteur mémorisée dans le quatrième espace de mémorisation, dans lesquels la mémorisation des données dans le premier espace de mémoire présuppose que l'indicatif coïncide avec l'identification du véhicule à moteur.

10. Système électronique pour véhicules à moteur avec au moins un dispositif d'affichage pour véhicules à moteur (101, 101') selon une des revendications précédentes et avec un appareil électronique pour véhicules à moteur (102) avec
- une deuxième interface (116) pour établir une première liaison vers un premier jeton d'ID (134), pour lire les données (109) du premier jeton d'ID,
- un cinquième espace de mémoire (112) pour la mémorisation du premier certificat (178),
- un sixième espace de mémoire (110) pour la mémorisation d'un troisième certificat (113), le troisième certificat étant affecté à l'appareil électronique pour véhicules à moteur,
- des moyens (122) pour l'authentification cryptographique vis-à-vis du premier jeton d'ID à l'aide du premier et/ou du troisième certificat,
- une troisième interface (118) pour la réception d'au moins un premier, un deuxième et un troisième certificats,
- une quatrième interface (143) pour la commande d'au moins un des dispositif d'affichage pour véhicules moteur (101, 101') par l'intermédiaire de la première interface (103) pour l'actualisation des données et des premier et deuxième certificats.

11. Véhicule à moteur avec au moins un dispositif d'affichage pour véhicules à moteur (101, 101') disposé de manière visible de l'extérieur selon une des revendications précédentes 1 à 9.

12. Procédé pour l'affichage de données (109) sur un dispositif d'affichage pour véhicules à moteur (101, 101') avec les étapes suivantes :
- réception des données et d'une signature des données au moyen d'une première interface (103),
- vérification de la validité de la signature à l'aide du premier certificat (178), mémorisé dans un deuxième espace de mémoire (119),
- mémorisation des données dans un premier espace de mémorisation (117) lorsque la signature est valide,
- commande d'un dispositif d'affichage (136) pour l'affichage des données.

13. Procédé selon la revendication 12, dans lequel la condition préalable pour la mémorisation des données dans le premier espace de mémorisation réside dans l'exécution couronnée de succès d'une authentification d'un émetteur (107) dont les données et leur signature ont été reçues, dans lequel une condition préalable pour la mémorisation des données dans le premier espace de mémorisation réside de plus dans l'exécution couronnée de succès d'une authentification du dispositif d'affichage pour véhicules à moteur vis-à-vis de l'émetteur.

14. Procédé selon une des revendications précédentes 12 à 13, dans lequel l'émetteur est un appareil électronique (102) de véhicules à moteur, et dans lequel l'appareil électronique de véhicules à moteur reçoit les données d'un jeton d'ID (134) avec les étapes suivantes :
- établissement d'une première liaison entre l'appareil électronique (102) de véhicules à moteur et le jeton d'ID,
- accès à une mémoire (104) de l'appareil électronique de véhicules à moteur pour lire un troisième certificat (113),
- authentification cryptographique de l'appareil électronique de véhicules à moteur vis-à-vis du jeton d'ID à l'aide du certificat (113),
- lecture des données du premier jeton d'ID par l'intermédiaire de la première liaison, après avoir exécuté avec succès l'authentification de l'appareil électronique de véhicules à moteur vis-à-vis du premier jeton d'ID,
- émission des données de l'appareil électronique de véhicules à moteur vers le dispositif d'affichage pour véhicules à moteur pour l'actualisation des données représentées par le dispositif d'affichage pour véhicules à moteur.

15. Produit logiciel informatique avec des instructions de programme exécutables pour l'exécution d'un procédé selon une des revendications précédentes 12 à 14.
